(19) Europäisches Patentamt
European Patent Office
Office européen des brevets

(11) EP 2 895 841 B1

(12) # FASCICULE DE BREVET EUROPEEN

(45) Date de publication et mention de la délivrance du brevet:
**24.04.2019 Bulletin 2019/17**

(21) Numéro de dépôt: **13773293.9**

(22) Date de dépôt: **13.09.2013**

(51) Int Cl.:
***G01N 5/02*** *(2006.01)* ***G01G 3/16*** *(2006.01)*
*H01M 10/42* *(2006.01)* *H01M 10/052* *(2010.01)*
*G01N 27/30* *(2006.01)*

(86) Numéro de dépôt international:
**PCT/FR2013/052105**

(87) Numéro de publication internationale:
**WO 2014/041314 (20.03.2014 Gazette 2014/12)**

(54) **PROCEDE DE DETECTION ET DE DOSAGE DE L'ACIDE FLUORHYDRIQUE AU SEIN D'UN ELECTROLYTE A BASE D'HEXAFLUOROPHOSPHATE DE LITHIUM POUR DES BATTERIES AU LITHIUM**

VERFAHREN ZUR DETEKTION UND DOSIERUNG VON FLUORWASSERSTOFFSÄURE IN EINEM ELEKTROLYTEN MIT HEXAFLUORPHOSPHAT-LITHIUM FÜR LITHIUMBATTERIEN

METHOD FOR DETECTING AND DOSING HYDROFLUORIC ACID IN AN ELECTROLYTE CONTAINING LITHIUM HEXAFLUOROPHOSPHATE FOR LITHIUM BATTERIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2012 FR 1258658**

(43) Date de publication de la demande:
**22.07.2015 Bulletin 2015/30**

(73) Titulaire: **Renault S.A.S.**
**92100 Boulogne-Billancourt (FR)**

(72) Inventeurs:
- **DOUGLADE, Grégory**
  **F-38100 Grenoble (FR)**
- **MARTIN, Jean-Frédéric**
  **F-38140 Renage (FR)**

(56) Documents cités:
- **XUEYUAN ZHANG ET AL: "Identity of Passive Film Formed on Aluminum in Li-Ion Battery Electrolytes with LiPF[sub 6]", JOURNAL OF THE ELECTROCHEMICAL SOCIETY, vol. 153, no. 9, 1 janvier 2006 (2006-01-01), page B344, XP055070505, ISSN: 0013-4651, DOI: 10.1149/1.2214465**
- **MORITA M ET AL: "Anodic behavior of aluminum in organic solutions with different electrolytic salts for lithium ion batteries", ELECTROCHIMICA ACTA, ELSEVIER SCIENCE PUBLISHERS, BARKING, GB, vol. 47, no. 17, 5 juillet 2002 (2002-07-05), pages 2787-2793, XP004366601, ISSN: 0013-4686, DOI: 10.1016/S0013-4686(02)00164-0**
- **KAWAMURA T ET AL: "Decomposition reaction of LiPF6-based electrolytes for lithium ion cells", JOURNAL OF POWER SOURCES, ELSEVIER SA, CH, vol. 156, no. 2, 1 juin 2006 (2006-06-01), pages 547-554, XP025083965, ISSN: 0378-7753, DOI: 10.1016/J.JPOWSOUR.2005.05.084 [extrait le 2006-06-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 895 841 B1

## Description

La présente invention concerne un procédé de détection et de dosage de la teneur en acide fluorhydrique présent au sein d'un électrolyte à base d'hexafluorophosphate de lithium $LiPF_6$ dans des batteries au lithium mis en oeuvre à partir de la mesure de la variation en poids d'un matériau susceptible de réagir en surface avec l'acide fluorhydrique au sein de l'électrolyte qui est déterminée à l'aide d'une microbalance à quartz.

Les batteries au lithium, ou accumulateurs au lithium, occupent une place de plus en plus importante sur le marché du stockage de l'énergie électrique. En effet, leurs performances actuelles, notamment au niveau du stockage de l'énergie électrique, dépassent de loin les technologies plus anciennes à base de batteries en nickel telles que les batteries en nickel hydrure métallique NiMH ou les batteries en nickel cadmium NiCd.

Parmi les batteries au lithium, les batteries lithium-ion sont des batteries rechargeables particulièrement intéressantes car elles peuvent être avantageusement utilisées comme source d'énergie dans des appareils électroniques portatifs tels que les téléphones mobiles et les ordinateurs portables, notamment grâce à leur faible coût de revient, ou dans le domaine de l'automobile comme dans les voitures électriques.

Les batteries lithium-ion comprennent généralement une électrode positive, notamment constituée par des oxydes de métaux de transition lithiés de type $Li(Ni, Mn, Co, Al)O_2$ tel que le dioxyde de cobalt lithié $LiCoO_2$, une électrode négative, notamment constituée par des matériaux carbonés tels que le graphite, et un électrolyte séparant l'électrode positive de l'électrode négative. L'électrolyte est imprégné dans un séparateur poreux et est constitué d'un mélange de carbonates et d'un sel de lithium, notamment l'hexafluorophosphate de lithium $LiPF_6$.

Les ions lithium se déplacent ainsi au sein de l'électrolyte entre l'électrode négative et l'électrode positive pour générer un courant électrique. En particulier, les ions lithium se déplacent de l'électrode négative vers l'électrode positive lors de la décharge de la batterie, et de l'électrode positive vers l'électrode négative pendant la recharge de la batterie.

La technologie des batteries lithium-ion se basent dans sa grande majorité sur l'utilisation d'hexafluorophosphate de lithium $LiPF_6$ qui assure des performances remarquables en termes de conductivité, de viscosité et de prix. Toutefois, l'hexafluorophosphate de lithium présente généralement un inconvénient majeur qui réside principalement dans son instabilité chimique.

En effet, l'hexafluorophosphate de lithium se dégrade souvent en donnant lieu à l'apparition de fluorure de lithium LiF et de pentafluorophosphate $PF_5$ selon le mécanisme suivant :

$$LiPF_6 \xrightarrow{\Delta} LiF + PF_5$$

La présence du pentafluorophosphate au sein de l'électrolyte contribue alors, en présence de molécules d'eau, à générer de l'acide fluorhydrique HF et du trifluorophosphate $OPF_3$ suivant la réaction suivante :

$$PF_5 + H_2O \xrightarrow{\Delta} 2HF + OPF_3$$

La présence de ces sous-produits, et en particulier de l'acide fluorhydrique, au sein de l'électrolyte peut engendrer des problèmes importants au niveau de la sécurité, de la durabilité et du recyclage de la batterie lithium-ion. En particulier, la présence de l'acide fluorhydrique engendre des problèmes de toxicité et son action ainsi que celles du pentafluorophosphate et du trifluorophosphate catalysent la dégradation de l'électrolyte ainsi que les performances globales et la durée de vie de la batterie. La dégradation de l'électrolyte peut notamment entraîner, d'une part, la formation d'une interface solide épaisse entre l'électrode et l'électrolyte (appelée Solid Electrolyte Interface SEI en langue anglaise) et, d'autre part, la formation de sous-produits néfastes au fonctionnement de la batterie. De plus, l'électrode positive peut également se dissoudre en présence des molécules acides engendrées par la dégradation du pentafluorophosphate.

Il en résulte qu'il s'avère important de pouvoir quantifier la présence de l'acide fluorhydrique au sein de l'électrolyte lors de son stockage pour éviter les problèmes de fonctionnement rencontrés dans les batteries lithium-ion.

Afin de remédier aux inconvénients mentionnés ci-avant, il a déjà été proposé de mettre en oeuvre une méthode de dosage acido-basique visant à doser la teneur en acide fluorhydrique présent dans l'électrolyte à base d'hexafluorophosphate de lithium. Toutefois, une telle méthode nécessite de prélever un échantillon au sein de l'électrolyte ce qui implique que la teneur en acide fluorhydrique est seulement mesurée à un temps donné et de façon *ex situ.*

Par ailleurs, il a également été proposé par le biais de la demande de brevet internationale WO 2004/104579 un procédé de détection du fluorure ou du fluorure d'hydrogène dans un échantillon qui met en oeuvre un composé organique silylé qui subit une réaction de désilylation lorsqu'il est en présence de l'acide fluorhydrique. L'apparition du composé organique désilylé ou la disparition du composé organique silylé est ensuite détecté et/ou dosé par le biais d'une chromatographie en phase gazeuse ou d'une détection et/ou d'un dosage réalisé au moyen d'un test immunologique. Le dosage de ces composés permet alors de déduire la teneur en acide fluorhydrique présent dans l'échantillon.

La demande de brevet internationale WO 2009/113994 a quant à elle proposé un procédé de détection de l'acide fluorhydrique en milieu aqueux et acide présent au cours de la préparation de la surface de semi-conducteurs.

Les publications XUEYUAN ZHANG ET AL: "Identity of Passive Film Formed on Aluminum in Li-Ion Battery Electrolytes with LiPF6", JOURNAL OF THE ELECTROCHEMICAL SOCIETY, vol. 153, no. 9, 1 janvier 2006, page B344 et MORITA M ET AL: "Anodic behavior of aluminum in organic solutions with différent electrolytic salts for lithium ion batteries", ELECTROCHIMICA ACTA, ELSEVIER SCIENCE PUBLISHERS, BARKING, GB, vol. 47, no. 17, 5 juillet 2002, pages 2787-2793, représentent également un état de l'art pertinent.

Ces documents décrivent des procédés qui ne sont pas adaptés à la détection de l'acide fluorhydrique dans des électrolytes qui comprennent de l'hexafluorophosphate de lithium et qui sont mis en oeuvre dans des batteries au lithium.

Au vu de ce qui précède, le but de l'invention est de proposer un procédé permettant de détecter et de mesurer au cours du temps la teneur en acide fluorhydrique présent au sein d'un électrolyte à base d'hexafluorophosphate de lithium $LiPF_6$, c'est-à-dire de doser *in situ* la teneur en acide fluorhydrique, afin de pouvoir limiter voire éliminer les problèmes de fonctionnement rencontrés dans les batteries au lithium qui ont été mentionnés précédemment.

A cet effet, il a été constaté qu'en mettant en oeuvre un procédé dans lequel on mesure à partir d'une microbalance à quartz la variation du poids d'une couche (a) contenant un matériau M susceptible de réagir en surface avec l'acide fluorhydrique HF présent au sein d'un électrolyte à base d'hexafluorophosphate de lithium $LiPF_6$, il était possible non seulement de détecter mais également de doser directement et efficacement au cours du temps la teneur en poids d'acide fluorhydrique présent au sein de l'électrolyte dans des batteries au lithium.

Le procédé selon l'invention consiste notamment à mettre en contact l'électrolyte à base d'hexafluorophosphate de lithium $LiPF_6$ avec une couche (a) contenant un matériau M capable de réagir en surface avec l'acide fluorhydrique HF qui est issu de la décomposition du pentafluorophosphate $PF_5$ selon la réaction mentionnée précédemment. Le matériau M de la couche (a) réagit donc avec l'acide fluorhydrique HF pour former en surface une couche (b) constituée d'un composé fluoré de structure $MF_n$, avec n correspondant à un nombre entier strictement supérieur à 0.

La formation de la couche (b) au niveau de la surface de la couche (a) entraîne une variation du poids de la couche (a) qui est mesurée par le biais d'une microbalance à quartz. En particulier, la couche (a) est déposée sur une électrode de la microbalance à quartz qui mesure la variation en poids de ladite couche ce qui permet de déduire la teneur en acide fluorhydrique qui a réagi avec le matériau de la couche (a) et, par conséquent, la teneur en poids d'acide fluorhydrique présent au sein de l'électrolyte.

En d'autres termes, le procédé repose notamment sur la réactivité de surface de matériaux, susceptibles de réagir en surface avec l'acide fluorhydrique, qui sont déposés sur une électrode d'une microbalance à quartz.

Ainsi le procédé conforme à la présente invention permet de déterminer *in situ* la teneur en acide fluorhydrique à un moment donné ainsi que son évolution au cours du temps.

Le procédé de détection et de dosage ainsi mis en oeuvre permet donc de pouvoir détecter et minimiser les problèmes de fonctionnement rencontrés au sein des batteries au lithium qui sont dus à la présence de l'acide fluorhydrique au sein de l'électrolyte.

La présente invention a donc notamment pour objet un procédé de détection et de dosage de la teneur en acide fluorhydrique dans un électrolyte à base d'hexafluorophosphate de lithium $LiPF_6$ dans des batteries au lithium comprenant les étapes suivantes :

(i) mettre en contact ledit électrolyte avec une couche (a) contenant un matériau M susceptible de réagir en surface avec l'acide fluorhydrique HF ; l'acide fluorhydrique provenant de la réaction entre l'hexafluorophosphate de lithium et l'eau,

(ii) mesurer la variation en poids de la couche (a) en mettant en contact ladite couche (a) avec une électrode d'une microbalance à quartz ; la variation en poids de la couche (a) étant due à la réaction entre le matériau M de la couche (a) et l'acide fluorhydrique HF pour former en surface une couche (b) contenant un composé fluoré de structure MFn avec n correspondant à un nombre entier strictement supérieur à 0 ;

(iii) calculer la teneur en poids d'acide fluorhydrique à partir de la variation en poids de la couche (a) déterminée à l'étape (ii).

Selon un mode de réalisation de l'invention, le procédé comprend également une étape de calcul de la quantité d'eau présent au sein de l'électrolyte.

Selon l'invention, l'étape (iii) du calcul en poids d'acide fluorhydrique est réalisée par comparaison avec des abaques établis à partir de solutions électrolytiques de titrage connu.

Ainsi la variation en poids de la couche (a) peut être mesurée à plusieurs reprises au cours du temps avec une

électrode d'une microbalance à quartz ce qui permet de déterminer la teneur en poids d'acide fluorhydrique au cours du temps qui est présent dans l'électrolyte.

Le procédé selon l'invention permet donc de mesurer avec précision la teneur en acide fluorhydrique.

D'autres objets, caractéristiques, aspects et avantages de l'invention apparaîtront encore plus clairement à la lecture de la description et des exemples qui suivent.

Conformément à la présente invention, la couche (a) comprend un matériau M susceptible de réagir en surface avec l'acide fluorhydrique présent dans l'électrolyte à base d'hexafluorophosphate de lithium $LiPF_6$.

De préférence, la couche (a) contient uniquement un matériau M susceptible de réagir en surface avec l'acide fluorhydrique. Dans ce cas, de préférence, la couche (a) est conformée en une pièce de type lamelle ou disque présentant une grande surface et une faible épaisseur.

Selon un mode de réalisation, le matériau M de la couche (a) est choisi parmi les éléments des colonnes suivantes de la classification périodique des éléments IIIA, IIIB et IB.

De préférence, le matériau de la couche (a) est choisi parmi l'aluminium, le bore et le silicium.

Préférentiellement, le matériau M de la couche (a) est choisi parmi les éléments des colonnes IIIA et IIIB de la classification périodique des éléments.

Plus préférentiellement, le matériau de la couche (a) est choisi parmi l'aluminium, le bore et le silicium, et notamment l'aluminium et le silicium.

Ainsi la couche (a) peut être une couche d'aluminium ou de silicium. Conformément à l'invention, la couche (b) formée n'est pas soluble dans l'électrolyte.

Encore plus préférentiellement, le matériau de la couche (a) est choisi parmi les métaux de la colonne IIIA figurant dans la classification périodique des éléments.

Selon un mode de réalisation plus particulièrement préféré, le matériau de la couche (a) correspond à l'aluminium.

Ainsi la couche (a) mise en oeuvre dans le procédé conforme à la présente invention est plus particulièrement une couche d'aluminium.

La couche (a) contenant un matériau susceptible de réagir en surface avec l'acide fluorhydrique peut présenter une épaisseur allant de 5 nm à 100 $\mu$m, de préférence une épaisseur allant de 5 nm à 200 nm.

La couche (a) peut également comporter une surface allant de 0,1 à 10 $cm^2$ de préférence allant de 1 à 5 $cm^2$.

De préférence, la couche (a) correspond à un disque d'aluminium pouvant présenter une superficie de $1{,}53 cm^2$.

Conformément à la présente invention, le procédé comprend une étape consistant à mettre en contact l'électrolyte avec la couche (a) contenant le matériau M susceptible de réagir en surface avec l'acide fluorhydrique qui provient de la réaction entre l'hexafluorophosphate de lithium et l'eau.

Selon un mode de réalisation, la couche (a) de matériau M est déposée sur une électrode d'une microbalance à quartz qui est ensuite directement mise en contact avec l'électrolyte par immersion de l'électrode dans ledit électrolyte.

En d'autres termes, l'électrode de la microbalance à quartz est recouverte par la couche (a) définie précédemment et est directement mise en contact par immersion dans l'électrolyte.

Conformément à ce mode de réalisation, la mesure de la variation en poids de la couche (a) est réalisée directement au sein de l'électrolyte à plusieurs reprises de manière à déterminer l'évolution de la teneur en poids d'acide fluorhydrique au cours du temps au sein de l'électrolyte.

Par extension, un calcul de la variation de la teneur en eau dans l'électrolyte est possible.

La mesure peut être recommencée avec la même électrode, si entre temps, ladite électrode est proprement rincée à l'eau et à l'acétone et ce jusqu'à épuisement de la couche (a).

Selon un autre mode de réalisation, la couche (a) est d'abord pesée sur une électrode d'une microbalance à quartz puis ladite couche (a) est immergée dans l'électrolyte. Après un temps nécessaire à la réaction entre l'acide fluorhydrique et le matériau de la couche (a), ladite couche (a) est déposée sur l'électrode de la microbalance à quartz pour mesurer la variation en poids de la couche (a).

En particulier, l'électrolyte contenant la couche (a) est prélevé de manière à pouvoir mesurer le poids de la couche (a).

Conformément à ce mode de réalisation, la mesure de la variation en poids de la couche (a) est réalisée suite au prélèvement d'une partie de l'électrolyte contenant la couche (a) et peut être effectuée à plusieurs reprises de manière à déterminer la teneur en poids d'acide fluorhydrique au cours du temps au sein de l'électrolyte.

Conformément à la présente invention, le matériau de la couche (a) réagit avec l'acide fluorhydrique présent dans l'électrolyte pour former, au niveau de la surface de ladite couche (a), une couche (b) contenant un composé fluoré de structure $MF_n$ avec n correspondant à un nombre entier strictement supérieur à 0 et M correspondant au matériau de la couche (a).

En particulier, lorsque le matériau de la couche (a) est choisi parmi l'aluminium, le bore et le silicium alors la couche (b) contient un composé fluoré de structure $MF_n$ avec M correspondant à un élément choisi parmi l'aluminium, le bore et le silicium et n correspondant à un nombre entier allant de 1 à 4.

Selon un mode de réalisation préféré, lorsque la couche (a) est une couche d'aluminium ou de silicium, alors la couche (b) est une couche de fluorure d'aluminium $AlF_3$ ou de tétrafluorure de silicium $SiF_4$.
Préférentiellement, la couche (b) est une couche de fluorure d'aluminium $AlF_3$.
Selon un mode de réalisation préféré, la couche (a) correspond à une couche d'aluminium et la couche (b), obtenue au niveau de la surface de la couche (a) suite à la réaction entre l'aluminium et l'acide fluorhydrique, est une couche de fluorure d'aluminium $AlF_3$.
La formation de la couche (b) au niveau de la surface de la couche (a) peut être observée par le biais d'une microscopie électronique à balayage MEB (Scanning Electron Microscopy en langue anglaise). Autrement dit, la microscopie électronique à balayage montre qu'une réaction de surface s'est effectivement produite entre l'acide fluorhydrique et le matériau de la couche (a).
Par ailleurs, la nature chimique de la couche (b) formée à la surface de la couche (a) peut être déterminée par le biais d'un spectre aux rayons X, notamment par l'intermédiaire d'une analyse dispersive en énergie EDX.
La formation de la couche (b) au niveau de la surface de la couche (a) engendre donc une variation du poids de la couche (a), plus particulièrement une augmentation du poids de la couche (a).
La variation du poids de la couche (a) est déterminée par le biais d'une microbalance à quartz.
En particulier, la couche (a) est déposée sur une électrode de la microbalance à quartz et la variation de poids de ladite couche (a) va induire une variation de la fréquence de résonnance du quartz. En effet, la variation de poids de la couche (a) sur l'électrode va entraîner un mouvement du quartz provoquant ainsi un décalage au niveau de sa fréquence de résonnance.
En d'autres termes, l'électrode de la microbalance à quartz mesure la variation de fréquence engendrée par la variation du poids de la couche (a). La mesure de la variation de fréquence permet donc de déterminer la variation de poids de la couche (a).
Ainsi la variation du poids de la couche (a) est déterminée à partir de la variation de la fréquence de la microbalance à quartz conformément à l'équation suivante :

$$\Delta f = \frac{-2\Delta m \times f_0^2}{A \times \sqrt{\rho_q \times \mu_q}}$$

dans laquelle :

> $\Delta$f correspond à la variation entre la fréquence de résonnance du quartz induite par la couche (a) avant réaction avec l'acide fluorhydrique et la fréquence de résonnance du quartz induite par la couche (a) après réaction avec l'acide fluorhydrique,
> $\Delta$m correspond à la variation en poids entre la couche (a) avant réaction avec l'acide fluorhydrique et la couche (a) après réaction avec l'acide fluorhydrique,
> $f_0$ correspond à la fréquence résonnance intrinsèque du quartz,
> $\rho_q$ correspond à la densité du quartz,
> $\mu_q$ correspond au module de cisaillement du quartz,
> A correspond à la surface active du quartz entre les électrodes de la microbalance à quartz.

La variation en poids de la couche (a) permet de déterminer le poids de la couche (b) formée ce qui permet de déduire la teneur en poids d'acide fluorhydrique qui a réagi avec le matériau de la couche (a) et, par conséquent, la teneur en poids d'acide fluorhydrique présent au sein de l'électrolyte.
La calibration de la microbalance à quartz peut s'effectuer avec l'utilisation de solutions étalonnées et certifiées dans un milieu équivalent à celui étudié, sans hexafluorophosphate de lithium. Des abaques sont ainsi spécifiquement réalisés pour chaque milieu étudié.
D'autres caractéristiques et avantages de l'invention apparaîtront à l'examen détaillé d'un mode de réalisation pris à titre d'exemple d'un procédé de détection et de dosage d'acide fluorhydrique au sein d'un électrolyte à base de $LiPF_6$ et illustrés par les dessins annexés, sur lesquels :

- la figure 1 représente un graphique dans lequel la variation en poids de la couche (a) a été représentée en fonction de la quantité d'eau pour des teneurs allant de 0 à 25 $\mu$L ;

- la figure 2 représente un graphique dans lequel la variation en poids de la couche (a) a été représentée en fonction de la quantité d'eau pour des teneurs allant de 35 à 130 $\mu$L.

Quatre disques d'aluminium ayant une superficie de 1,53 $cm^2$ ont été préparés à partir de feuilles d'aluminium destinées à servir comme collecteur de courant. Ces disques ont été lavés, séchés puis pesés avec une microbalance à quartz. Chaque échantillon a ensuite été immergé dans un électrolyte tel que décrit ci-après.

L'électrolyte étudié correspond à une solution à 1 $mol.L^{-1}$ de liPF6 dissous dans un mélange de carbonate de type EC (1), PC (1), DMC (3). En boîte à gants, 10 ml de la solution sont introduits dans quatre flacons en plastique, chaque quantité d'électrolyte est soigneusement et précisément pesée. Dans chaque flacon, un échantillon tel que mentionné ci-avant est introduit.

Dans chaque flacon, on introduit une quantité croissante d'eau à l'aide d'une micropipette de 5$\mu$L, en particulier 4, 9, 15 et 22 mg d'eau ainsi qu'une solution témoin sans ajout d'eau.

L'hexafluorophosphate de lithium réagit donc selon la réaction suivante :

$$LiPF_6 + H_20 \rightarrow LiF + OPF_3 + 2HF$$

Les solutions sont ensuite placées dans un dessiccateur rempli de desséchant (gel de silice) préalablement séché, pendant 7 jours ; le dessiccateur est placé sous pression réduite le temps de l'expérience pendant 24 heures.

A l'issu de cette période, les disques d'aluminium sont retirés de l'électrolyte et sont rincés au diméthyl carbonate puis à l'acétone et séché à 60°C pendant 24 heures. Une fois sec, les disques sont de nouveau pesés à l'aide de la microbalance à quartz.

Comme l'indique la figure 1, la variation en poids du disque d'aluminium est proportionnelle à la quantité d'eau introduite.

Les résultats de la variation en poids des disques d'aluminium sont indiqués dans le tableau suivant :

| Numéro de l'échantillon | Masse d'aluminium (mg) avant réaction | Masse d'aluminium (mg) après réaction | Variation de la masse des disques d'aluminium en mg |
|---|---|---|---|
| 1 | 8,413 | 8,415 | 0,002 |
| 2 | 8,369 | 8,681 | 0,312 |
| 3 | 8,389 | 9,279 | 0,89 |
| 4 | 8,395 | 9,473 | 1,078 |

D'autres tests ont été menés avec des quantités d'eau plus importantes allant de 35 à 130 $\mu$L et un comportement linéaire a là aussi été observé comme indiqué dans la figure 2.

L'observation visuelle des disques d'aluminium indique que la surface a bien été modifiée étant donné que l'on constate la présence d'une surface blanche sur les disques.

Par ailleurs, les clichés effectués à l'aide de la microscopie électronique à balayage (MEB) prouvent qu'une réaction de surface s'est produite.

L'analyse EDX indique que la nature chimique des composés formés est du type $AlF_3$ ce qui confirme bien la réaction de surface à la surface de l'électrode de la microbalance à quartz.

L'expérience montre qu'une loi linéaire existe entre la quantité d'eau présente dans l'électrolyte et la prise de masse de la couche a. Dès lors, pour l'homme du métier, il suffit d'établir des abaques qui permettent, par simple vérification de la masse de la couche b, de remonter à la quantité d'eau et d'acide fluorhydrique dans l'électrolyte.

## Revendications

1. Procédé de détection et de dosage d'acide fluorhydrique dans un électrolyte à base d'hexafluorophosphate de lithium $LiPF_6$ comprenant les étapes suivantes :

   (i) mettre en contact ledit électrolyte avec une couche (a) contenant un matériau M susceptible de réagir en surface avec l'acide fluorhydrique HF ; l'acide fluorhydrique provenant de la réaction entre l'hexafluorophosphate de lithium et l'eau,
   (ii) mesurer la variation en poids de la couche (a) en mettant en contact ladite couche (a) avec une électrode d'une microbalance à quartz ; la variation en poids de la couche (a) étant due à la réaction entre le matériau M de la couche (a) et l'acide fluorhydrique HF pour former en surface une couche (b) contenant un composé fluoré de structure MFn avec n correspondant à un nombre entier strictement supérieur à 0 ;
   (iii) calculer la teneur en poids d'acide fluorhydrique à partir de la variation en poids de la couche (a) déterminée

à l'étape (ii).

2. Procédé selon la revendication 1 comprenant une étape (iv) de détermination de la quantité d'eau au sein dudit électrolyte.

3. Procédé selon la revendication 1, **caractérisé en ce que** le matériau de la couche (a) est choisi parmi les éléments des colonnes IIIA, IIIB et IB de la classification périodique des éléments.

4. Procédé selon la revendication 1 ou 2, **caractérisé en ce que** le matériau de la couche (a) est choisi parmi l'aluminium, le bore et le silicium.

5. Procédé selon l'une quelconque des revendications 1 à 3, **caractérisé en ce que** le matériau de la couche (a) est choisi parmi les métaux de la colonne IIIA figurant dans la classification périodique des éléments.

6. Procédé selon l'une quelconque des revendications précédentes, **caractérisé en ce que** la couche (a) est une couche d'aluminium.

7. Procédé selon la revendication 1, **caractérisé en ce que** lorsque le matériau M de la couche (a) est choisi parmi l'aluminium, le bore et le silicium alors la couche (b) contient un composé fluoré de structure $MF_n$ avec M correspondant à un élément choisi parmi l'aluminium, le bore et le silicium et n correspondant à un nombre entier allant de 1 à 4.

8. Procédé selon la revendication 7, **caractérisé en ce que** la couche (b) est une couche de fluorure d'aluminium $AlF_3$ ou une couche tétrafluorure de silicium $SiF_4$.

9. Procédé selon l'une quelconque des revendications précédentes, **caractérisé en ce que** la couche (a) est déposée sur une électrode d'une microbalance à quartz qui est ensuite directement mise en contact avec l'électrolyte par immersion de l'électrode dans ledit électrolyte pour mesurer la variation en poids de la couche (a).

10. Procédé selon l'une quelconque des revendications 1 à 7, **caractérisé en ce que** la couche (a) est, dans un premier temps pesée sur une électrode d'une microbalance à quartz puis, dans un deuxième temps, immergée dans l'électrolyte, et, après un temps nécessaire à la réaction entre l'acide fluorhydrique et le matériau de la couche (a), la couche (a) est déposée sur l'électrode de la microbalance à quartz pour mesurer la variation en poids de la couche (a)

## Patentansprüche

1. Verfahren zur Detektion und Dosierung von Fluorwasserstoffsäure in einem Elektrolyten auf Basis von Lithiumhexafluorophosphat $LiPF_6$, umfassend die folgenden Schritte:

   (i) Inkontaktbringen des Elektrolyten mit einer Schicht (a), die ein Material M enthält, das geeignet ist, an der Oberfläche mit der Fluorwasserstoffsäure HF zu reagieren; wobei die Fluorwasserstoffsäure aus der Reaktion zwischen dem Lithiumhexafluorophosphat mit Wasser stammt,
   (ii) Messen der Gewichtsvariation der Schicht (a), wobei die Schicht (a) mit einer Elektrode einer Quarzkristall-Mikrowaage in Kontakt gebracht wird; wobei die Gewichtsvariation der Schicht (a) auf die Reaktion zwischen dem Material M der Schicht (a) und der Fluorwasserstoffsäure HF, um an der Oberfläche eine Schicht (b) zu bilden, die eine Fluorverbindung der Struktur MFn enthält, zu bilden, wobei n einer ganzen Zahl unbedingt größer als 0 entspricht, zurückzuführen ist;
   (iii) Berechnen des Gehalts in Gewichtsprozent an Fluorwasserstoffsäure auf Basis der Gewichtsvariation der in Schritt (ii) bestimmten Schicht (a).

2. Verfahren nach Anspruch 1, umfassend einen Schritt (iv) der Bestimmung der Wassermenge innerhalb des Elektrolyten.

3. Verfahren nach Anspruch 1, **dadurch gekennzeichnet, dass** das Material der Schicht (a) unter den Elementen der Gruppen IIIA, IIIB und IB des Periodensystems der Elemente ausgewählt ist.

4. Verfahren nach Anspruch 1 oder 2, **dadurch gekennzeichnet, dass** das Material der Schicht (a) unter Aluminium,

Bor und Silizium ausgewählt ist.

5. Verfahren nach einem der Ansprüche 1 bis 3, **dadurch gekennzeichnet, dass** das Material der Schicht (a) unter den Metallen der Gruppe IIIA, die im Periodensystem der Elemente vorhanden ist, ausgewählt ist.

6. Verfahren nach einem der vorhergehenden Ansprüche, **dadurch gekennzeichnet, dass** die Schicht (a) eine Aluminiumschicht ist.

7. Verfahren nach Anspruch 1, **dadurch gekennzeichnet, dass**, wenn das Material M der Schicht (a) unter Aluminium, Bor und Silizium ausgewählt ist, die Schicht (b) nun eine Fluorverbindung der Struktur $MF_n$ enthält, wobei M einem Element entspricht, das unter Aluminium, Bor und Silizium ausgewählt ist, und wobei n einer ganzen Zahl von 1 bis 4 entspricht.

8. Verfahren nach Anspruch 7, **dadurch gekennzeichnet, dass** die Schicht (b) eine Schicht aus Aluminiumfluorid $AlF_3$ oder eine Schicht aus Siliziumtetrafluorid $SiF_4$ ist.

9. Verfahren nach einem der vorhergehenden Ansprüche, **dadurch gekennzeichnet, dass** die Schicht (a) auf eine Elektrode einer Quarzkristall-Mikrowaage aufgebracht wird, die sodann direkt mit dem Elektrolyten durch Eintauchen der Elektrode in den Elektrolyten in Kontakt gebracht wird, um die Gewichtsvariation der Schicht (a) zu messen.

10. Verfahren nach einem der Ansprüche 1 bis 7, **dadurch gekennzeichnet, dass** die Schicht (a) zuerst auf einer Elektrode einer Quarzkristall-Mikrowaage abgewogen, dann in den Elektrolyten eingetaucht wird, und nach einer Zeit, die für die Reaktion zwischen der Fluorwasserstoffsäure und dem Material der Schicht (a) notwendig ist, die Schicht (a) auf die Elektrode der Quarzkristall-Mikrowaage aufgebracht wird, um die Gewichtsvariation der Schicht (a) zu messen.

## Claims

1. Process for detecting and assaying hydrofluoric acid in an electrolyte based on lithium hexafluorophosphate $LiPF_6$, comprising the following stages:

   (i) bringing said electrolyte into contact with a layer (a) comprising a material M capable of reacting at the surface with hydrofluoric acid HF, the hydrofluoric acid originating from the reaction between lithium hexafluorophosphate and water,
   (ii) measuring the variation in weight of the layer (a) by bringing said layer (a) into contact with an electrode of a quartz crystal microbalance, the variation in weight of the layer (a) being due to the reaction between the material M of the layer (a) and the hydrofluoric acid HF to form, at the surface, a layer (b) comprising a fluorinated compound having the structure $MF_n$, with n corresponding to an integer strictly greater than 0;
   (iii) calculating the content by weight of hydrofluoric acid from the variation in weight of the layer (a) determined in stage (ii).

2. Process according to Claim 1, comprising a stage (iv) of determining the amount of water within said electrolyte.

3. Process according to Claim 1, **characterized in that** the material of the layer (a) is chosen from the elements of Groups IIIa, IIb and Ib of the Periodic Table of the Elements.

4. Process according to Claim 1 or 2, **characterized in that** the material of the layer (a) is chosen from aluminum, boron and silicon.

5. Process according to any one of Claims 1 to 3, **characterized in that** the material of the layer (a) is chosen from the metals of Group IIIa appearing in the Periodic Table of the Elements.

6. Process according to any one of the preceding claims, **characterized in that** the layer (a) is a layer of aluminum.

7. Process according to Claim 1, **characterized in that**, when the material M of the layer (a) is chosen from aluminum, boron and silicon, then the layer (b) comprises a fluorinated compound having the structure $MF_n$, with M corresponding to an element chosen from aluminum, boron and silicon and n corresponding to an integer ranging from 1 to 4.

**8.** Process according to Claim 7, **characterized in that** the layer (b) is a layer of aluminum fluoride $AlF_3$ or a layer of silicon tetrafluoride $SiF_4$.

**9.** Process according to any one of the preceding claims, **characterized in that** the layer (a) is deposited on an electrode of a quartz crystal microbalance which is subsequently brought directly into contact with the electrolyte by immersion of the electrode in said electrolyte in order to measure the variation in weight of the layer (a).

**10.** Process according to any one of Claims 1 to 7, **characterized in that** the layer (a) is, in a first step, weighed on an electrode of a quartz crystal microbalance, then, in a second step, immersed in the electrolyte and, after a time necessary for the reaction between the hydrofluoric acid and the material of the layer (a), the layer (a) is deposited on the electrode of the quartz crystal microbalance in order to measure the variation in weight of the layer (a).

FIG.1

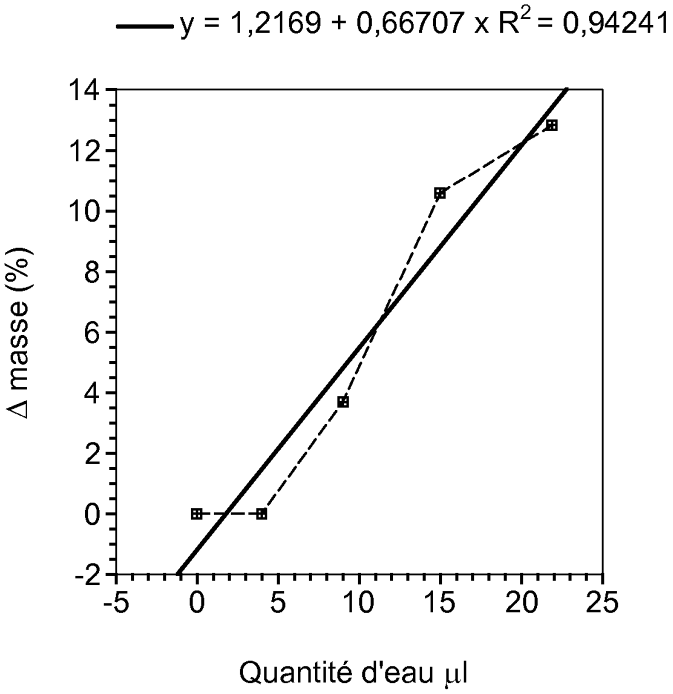
y = 1,2169 + 0,66707 x R2 = 0,94241
14
12
10
8
6
4
2
0
-2
Δ masse (%)
-5
0
5
10
15
20
25
Quantité d'eau µl

FIG.2

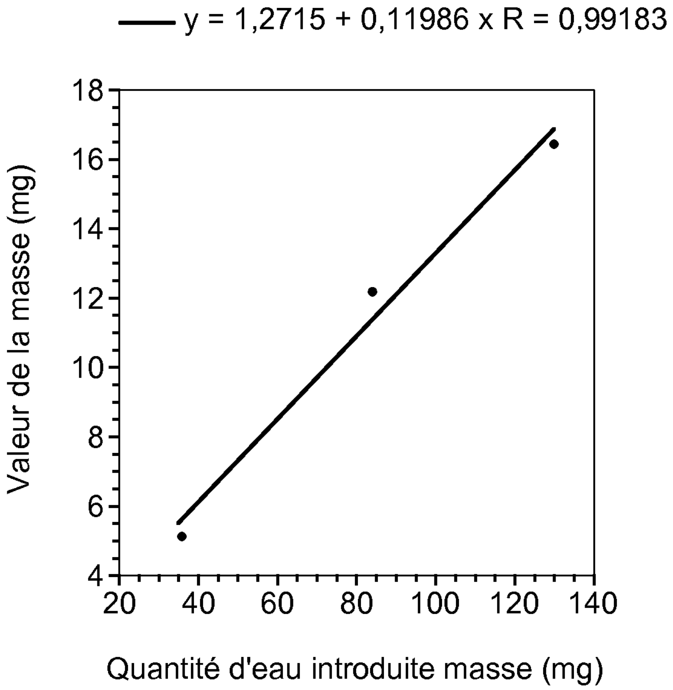
y = 1,2715 + 0,11986 x R = 0,99183
18
16
14
12
10
8
6
4
Valeur de la masse (mg)
20
40
60
80
100
120
140
Quantité d'eau introduite masse (mg)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004104579 A
- WO 2009113994 A


### Littérature non-brevet citée dans la description


- **XUEYUAN ZHANG et al.** Identity of Passive Film Formed on Aluminum in Li-Ion Battery Electrolytes with LiPF6. *JOURNAL OF THE ELECTROCHEMICAL SOCIETY,* 01 Janvier 2006, vol. 153 (9), B344
- Anodic behavior of aluminum in organic solutions with différent electrolytic salts for lithium ion batteries. **MORITA M et al.** ELECTROCHIMICA ACTA. ELSEVIER SCIENCE PUBLISHERS, 05 Juillet 2002, vol. 47, 2787-2793